(19) Europäisches Patentamt / European Patent Office / Office européen des brevets

(11) **EP 4 559 728 A1**

(12) **EUROPEAN PATENT APPLICATION**
published in accordance with Art. 153(4) EPC

(43) Date of publication:
**28.05.2025 Bulletin 2025/22**

(21) Application number: **23934897.2**

(22) Date of filing: **25.09.2023**

(51) International Patent Classification (IPC):
*B60L 15/20* (2006.01)       *B60L 15/00* (2006.01)
*B60W 30/18* (2012.01)       *B60W 30/00* (2006.01)
*B60W 10/08* (2006.01)       *B60W 10/00* (2006.01)
*B60T 7/12* (2006.01)       *B60T 7/00* (2006.01)
*B60W 40/076* (2012.01)       *B60W 40/06* (2012.01)

(52) Cooperative Patent Classification (CPC):
Y02T 10/72

(86) International application number:
**PCT/CN2023/120995**

(87) International publication number:
**WO 2024/221728 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.04.2023 CN 202310457220**

(71) Applicant: **Deepal Automobile Technology Co.,
Ltd.
Chongqing 401133 (CN)**

(72) Inventors:
• **YANG, Guanlong
Chongqing 401135 (CN)**
• **YAN, Qinshan
Chongqing 401135 (CN)**
• **SU, Linke
Chongqing 401135 (CN)**

(74) Representative: **2K Patentanwälte Blasberg
Kewitz & Reichel
Partnerschaft mbB
Schumannstrasse 27
60325 Frankfurt am Main (DE)**

(54) **ASSISTED CONTROL METHOD AND SYSTEM FOR PREVENTING ROLLBACK OF ELECTRIC VEHICLE, AND VEHICLE**

(57)       An assisted control method and system for preventing rollback of an electric vehicle, and a vehicle. The method comprises: when a first anti-rollback function is activated, if the absolute value of a gradient is smaller than or equal to S1, determining a first torque T1, and requesting to control a motor to smoothly output the first torque T1, and otherwise, requesting an electrical park brake system to keep clamped; when a second anti-rollback function is activated, if a hill assist function is activated by stepping a brake pedal and the brake pedal is released, determining a second torque T2, and requesting to control the motor to continuously and smoothly output the second torque T2 within a t0, and if the hill assist function is not activated by stepping the brake pedal, determining a third torque T3, and requesting to control the motor to smoothly output the third torque T3; and when a condition of exiting the anti-rollback function is met, exiting the anti-rollback function. According to the method, the reliability of the anti-rollback function can be improved, the driving comfort and safety of a driver on a hill are improved, and the hill-start experience of different driving modes is improved.

EP 4 559 728 A1

Fig. 2

**Description**

TECHNICAL FIELD

The present invention pertains to the field of electric vehicle control, and specifically relates to an assisted control method and system for preventing rollback of electric vehicle, and vehicle.

BACKGROUND

Electric vehicles are increasingly favored by market users. However, when the electric vehicle starts on a hill, if a driver is not skilled in operation, the vehicle is at a risk of rolling backward (that is, rolling back). Even if the vehicle has a hill hold control system (that is, HHC) and has a hill assist function, because a time for which the hill assist function works on the hill (that is, a hill assist function hold time) is only 1s to 3s, in some conditions or scenarios, if the driver does not depress an accelerator in a timely manner within 3s, a problem of rolling back by the vehicle occurs.

CN106926751A discloses an anti-rollback control method and apparatus for a vehicle. In the method, it is determined, based on a vehicle gear and a motor rotation speed condition, whether to enter an anti-rollback mode; and when the vehicle is in the anti-rollback mode, vehicle torque is controlled based on a motor rotation speed and a target motor rotation speed. However, in the method, a control manner is undiversified, resulting in poor comfort of driving on a hill by a driver and poor hill start experience.

CN111231693A discloses an anti-rollback control method and apparatus. In the method, it is determined, based on at least one of handbrake information, brake information, motor rotation speed information, gear information, and accelerator information, whether to activate an anti-rollback function; and if it is determined that a vehicle is in an anti-rollback function enabled state, whether the IGBT chip temperature exceeds an alarm temperature continues to be determined, and when the alarm temperature is exceeded, chip power is controlled, maximum torque in a subsequent anti-rollback process is limited, and the vehicle is controlled to be in a zero rotation speed mode by using the motor controller, to restrain the vehicle from rolling back by using the zero rotation speed mode. However, in the method, a control manner is undiversified, resulting in poor comfort of driving on a hill by a driver and poor hill start experience.

CN113246748A discloses an anti-rollback control method and system for an electric vehicle, and a vehicle. In the method, when it is determined that an anti-rollback function of a vehicle is activated, first-order filtering processing is first performed on a motor rotation speed, to obtain a rotation speed n2; a relationship table between initial anti-rollback torque and a first rotation speed n2 is queried based on the first rotation speed n2, to obtain initial anti-rollback torque Tq1; PI control is performed based on a rotation speed difference n3 between the rotation speed n2 and a target rotation speed, to obtain PI adjustment torque Tq2, where the target rotation speed is 0 rpm; the initial anti-rollback torque Tq1 and the PI adjustment torque Tq2 are added to obtain anti-rollback base torque Tq3; and first-order filtering processing and rate of change processing are performed on the anti-rollback target torque Tq3, to obtain final anti-rollback torque. However, in the method, a control manner is undiversified, resulting in poor comfort of driving on a hill by a driver and poor hill start experience.

CN112265544A discloses an anti-rollback auxiliary control method for a new energy vehicle. In the method, the following content is described: When an anti-rollback system identifies a starting rollback condition, a motor is controlled to output stall torque for rollback prevention with an objective of controlling a motor rotation speed to be 0; when the anti-rollback system identifies that anti-rollback of the motor times out or a fault indicating that the stall torque for rollback prevention cannot be maintained occurs in an electric drive system, and the vehicle does not start, a brake is not depressed, or a handbrake is not engaged, a brake actuator is controlled, by using a vehicle stability controller, to output driving braking force for rollback prevention; when the anti-rollback system identifies that anti-rollback of the vehicle stability controller times out, and the vehicle still does not start, the brake is still not depressed, or the handbrake is still not engaged, an electronic parking controller is controlled to perform hill hold control, and the electronic hill hold controller controls the brake actuator to continue to output mechanical braking force for parking; and in an anti-rollback auxiliary control process, when a driver operates the vehicle to start, depresses the brake, or engages the handbrake, the system automatically releases the motor stall torque or the mechanical braking force. In the method, when a motor torque stall times out, an ESP is introduced to control the vehicle to park for a short time, and when control of the ESP times out, an EPB is introduced for parking. However, in the method, corresponding control is performed when rollback has already occurred, resulting in poor comfort of driving on a hill by the driver and poor hill start experience.

SUMMARY

An objective of the present invention is to provide an auxiliary control method and system for preventing an electric vehicle from rolling back, and a vehicle, to enhance reliability of an anti-rollback function and improve hill start experience of a driver.

The auxiliary control method for preventing an electric vehicle from rolling back described in the present invention includes the following:

When an anti-rollback function I is activated, if an absolute value of a slope is less than or equal to a first preset slope S1, first torque $T_1$ is determined, and a request is made to control a motor to smoothly output the first torque $T_1$, to prevent rollback; or if an absolute value of a slope is greater than a first preset slope S1, an electronic parking brake system (that is, EPB) is requested to maintain clamping, to implement that the vehicle is parked without rolling back. After the anti-rollback function I is activated, a control manner of outputting torque by the motor for rollback prevention and a control manner of implementing clamping by the EPB for rollback prevention are separately used based on the absolute value of the slope. This ensures that the vehicle does not roll backward, reduces a quantity of times the EPB works, and prolongs a working life of the EPB. In addition, this reduces a quantity of times the motor outputs high torque, saves some energy, ensures specific driving smoothness, lowers difficulty in controlling the motor to load the torque on a large hill, and improves comfort and safety of driving on the hill by a driver.

When an anti-rollback function II is activated, if a brake pedal is depressed to activate a hill assist function and the brake pedal is released, second torque $T_2$ is determined, and a request is made to control the motor to continuously and smoothly output the second torque $T_2$ within a first preset time $t_0$, to assist the driver in depressing an accelerator for starting; or if a brake pedal is depressed not to activate a hill assist function, third torque $T_3$ is determined, and a request is made to control the motor to smoothly output the third torque $T_3$, to prevent rollback. The first preset time $t_0$ is equal to a hill assist function hold time. After the anti-rollback function II is activated, control is performed in two cases. This can ensure that during a period in which a hill hold control system (that is, HHC) works, the torque is preloaded in advance, to avoid a case in which the vehicle rolls backward due to untimely motor torque control. If the hill assist function is not activated, the driver depresses the brake pedal, and loads the motor torque, to assist in rollback prevention. This reduces a fatigue degree when the driver depresses the brake pedal during driving, and improves hill start experience of the driver.

When a condition for exiting the anti-rollback function is met, the anti-rollback function is exited.

Preferably, there are two methods for determining the first torque $T_1$.

In a first method, a gross vehicle weight and the slope are obtained; and the gross vehicle weight and the absolute value of the slope are substituted into a preset torque curve, to calculate the corresponding first torque $T_1$. The preset torque curve is a correspondence curve that is between first torque and both a gross vehicle weight and an absolute value of a slope and that is obtained by using a numerical fitting method based on the gross vehicle weight, the absolute value of the slope, and experimental data of the first torque. The gross vehicle weight is a positive value, and is not a negative value. Therefore, a heavier gross vehicle weight indicates higher first torque. The slope is a positive value or a negative value. When a front of the vehicle faces downhill, the slope is a negative value; or when a front of the vehicle faces uphill, the slope is a positive value. A larger absolute value of the slope indicates higher first torque. The correspondence curve between the first torque and both the gross vehicle weight and the absolute value of the slope is obtained by using the numerical fitting method, and the first torque is calculated based on the curve. This reduces some experimental and testing conditions, and lowers research and development costs.

In a second method, a gross vehicle weight and the slope are obtained; and a preset first torque table is queried by using a linear interpolation method based on the gross vehicle weight and the absolute value of the slope, to obtain the corresponding first torque $T_1$. The preset first torque table is a correspondence table that is between first torque and both a gross vehicle weight and an absolute value of a slope and that is obtained through experimentation. The first torque is calculated by using the linear interpolation method. This reduces some experimental and testing conditions, and lowers research and development costs.

Preferably, a method for determining the second torque $T_2$ is:

obtaining the slope and an actual vehicle speed; and

calculating the second torque $T_2$ by using a formula $T_2 = \begin{cases} T_{int}, & 0 \le t \le t_1 \\ T_{comp}, & t_1 < t \le t_0 \end{cases}$.

Herein, $T_{int}$ represents first-stage torque, duration of the first-stage torque is $t_1$, $T_{int} = k_1 \times T_{crp}$, $k_1$ represents a correction coefficient, $T_{crp}$ represents creep torque, $T_{comp}$ represents second-stage torque, duration of the second-stage torque is $t_0 - t_1$, and $T_{comp}$ is obtained by performing PI closed-loop calculation based on a difference between the actual vehicle speed and a preset starting vehicle speed. The torque loaded during a period in which the hill assist function works is divided into two stages. Different torque is loaded in the two stages (that is, different calculation manners are used), to implement a smooth transition between the anti-rollback function and a creep function. PI closed-loop control in the second stage is bottom line control, to prevent the vehicle from rolling backward.

Preferably, a preset timetable is queried based on the absolute value of the slope, to obtain the duration $t_1$ of the first-stage torque. The preset timetable is a correspondence table that is between an absolute value of a slope and time and that is obtained through calibration. A larger absolute value of the slope indicates shorter duration $t_1$ of the first-stage torque.

Preferably, a preset correction coefficient table is queried based on the absolute value of the slope, to obtain the correction coefficient $k_1$. The preset correction coefficient table is a correspondence table that is between an absolute value of a slope and a correction coefficient and that is obtained through calibration. A larger absolute value of the slope indicates a larger correction coefficient $k_1$.

Preferably, a preset creep torque table is queried based on the actual vehicle speed, to obtain the creep torque $T_{crp}$. The preset creep torque table is a correspondence table that is between an (actual) vehicle speed and creep torque and that is obtained through calibration.

Preferably, that a request is made to control the motor to continuously and smoothly output the second torque $T_2$ within a first preset time $t_0$ means that a request is made to control torque output by the motor to be increased from 0 to $T_{int}$ based on a first gradient a and last for $t_1$, and then control the torque to be changed from $T_{int}$ to $T_{comp}$ based on a second gradient b and last for $t_0 - t_1$. The first gradient a is obtained by querying a preset first gradient table based on the gross vehicle weight and the absolute value of the slope. The second gradient b is obtained by querying a preset second gradient table based on the gross vehicle weight and the absolute value of the slope. The preset first gradient table is a correspondence table that is between a first gradient and both a gross vehicle weight and an absolute value of a slope and that is obtained through calibration. A heavier gross vehicle weight indicates a larger first gradient a, and a larger absolute value of the slope indicates a larger first gradient a. The preset second gradient table is a correspondence table that is between a second gradient and both a gross vehicle weight and an absolute value of a slope and that is obtained through calibration. A heavier gross vehicle weight indicates a larger second gradient b, and a larger absolute value of the slope indicates a larger second gradient b. In the gradient-based increase manner, responsiveness of the second torque can be ensured, and loading stability of the second torque can be ensured, to avoid an impact problem of the vehicle.

Preferably, that a request is made to control the motor to continuously and smoothly output the second torque $T_2$ within a first preset time $t_0$ means that a request is made to control torque output by the motor to be increased from 0 to $T_{int}$ in a first-order filtering or second-order filtering manner and last for $t_1$, and then control the torque to be changed from $T_{int}$ to $T_{comp}$ in the first-order filtering or second-order filtering manner and last for $t_0 - t_1$. In the filtering manner, responsiveness of the second torque can be ensured, and loading stability of the second torque can be ensured, to avoid an impact problem of the vehicle.

Preferably, a method for determining the third torque $T_3$ is:

obtaining an actual vehicle speed, the slope, and brake pedal travel;

querying a preset initial torque table based on the actual vehicle speed and the absolute value of the slope, to obtain initial torque $T_s$, where the preset initial torque table is a correspondence table that is between initial torque and both an actual vehicle speed and an absolute value of a slope and that is obtained through calibration;

querying a preset correction factor table based on the brake pedal travel, to obtain a correction factor $k_2$, where the preset correction factor table is a correspondence table that is between brake pedal travel and a correction factor and that is obtained through calibration, and longer brake pedal travel indicates a smaller correction factor; and

calculating the third torque $T_3$ by using a formula $T_3 = k_2 \times T_s$.

The third torque $T_3$ is determined based on the actual vehicle speed, the absolute value of the slope, and the brake pedal travel. This ensures that a following intention of the driver on the hill and the anti-rollback function can be implemented at different vehicle speeds and slopes, difficulty of driving by the driver is lowered, comfort and safety of driving on the hill by the driver are improved, and hill start experience of the driver is improved.

Preferably, that a request is made to control a motor to smoothly output the first torque $T_1$ means that a request is made to control the torque output by the motor to be increased from 0 to the first torque $T_1$ based on a third gradient c. The third gradient c is obtained by querying a preset third gradient table based on the gross vehicle weight and the absolute value of the slope. The preset third gradient table is a correspondence table that is between a third gradient and both a gross vehicle weight and an absolute value of a slope and that is obtained through calibration. A heavier gross vehicle weight indicates a larger third gradient c, and a larger absolute value of the slope indicates a larger third gradient c. In the gradient-based increase manner, responsiveness of the first torque can be ensured, and loading stability of the first torque can be ensured, to avoid an impact problem of the vehicle.

Preferably, that a request is made to control the motor to smoothly output the third torque $T_3$ means that a request is made to control the torque output by the motor to be increased from 0 to the third torque $T_3$ based on a fourth gradient d. The fourth gradient d is obtained by querying a preset fourth gradient table based on the gross vehicle weight and the absolute value of the slope. The preset fourth gradient table is a correspondence table that is between a fourth gradient and both a gross vehicle weight and an absolute value of a slope and that is obtained through calibration. A heavier gross vehicle weight indicates a larger fourth gradient d, and a larger absolute value of the slope indicates a larger fourth gradient d. In the gradient-based increase manner, responsiveness of the third torque can be ensured, and loading stability of the third torque can be ensured, to avoid an impact problem of the vehicle.

Preferably, that a request is made to control a motor to smoothly output the first torque $T_1$ means that a request is made to control the torque output by the motor to be increased from 0 to the first torque $T_1$ in the first-order filtering or second-order filtering manner. In the filtering manner, responsiveness of the first torque can be ensured, and loading stability of the first torque can be ensured, to avoid an impact problem of the vehicle.

Preferably, that a request is made to control the motor to smoothly output the third torque $T_3$ means that a request is made to control the torque output by the motor to be increased from 0 to the third torque $T_3$ in the first-order filtering or second-order filtering manner. In the filtering manner, responsiveness of the third torque can be ensured, and loading stability of the third torque can be ensured, to avoid an impact problem of the vehicle.

Preferably, if all of conditions 1a to 1e are met, it indicates that a condition for activating the anti-rollback function I is met, and the anti-rollback function I is activated.

The condition 1a is that a gear is shifted from a P gear to a D gear or an R gear.

The condition 1b is that when a shift to the D gear is made, the slope is greater than or equal to S2; or when a shift to the R gear is made, the slope is less than or equal to -S2, where S2 represents a second preset slope, and 0<S2<S1.

The condition 1c is that the actual vehicle speed is less than or equal to a preset first vehicle speed V1.

The condition 1d is that an accelerator pedal is not depressed.

The condition 1e is that there is no fault affecting the motor torque.

Preferably, if all of conditions 2a to 2g are met, it indicates that a condition for activating the anti-rollback function II is met, and the anti-rollback function II is activated.

The condition 2a is that the gear is the D gear or the R gear.

The condition 2b is that in the D gear, the slope is greater than or equal to S2; or in the R gear, the slope is less than or equal to -S2.

The condition 2c is that the actual vehicle speed is less than or equal to the preset first vehicle speed V1.

The condition 2d is that the accelerator pedal is not depressed.

The condition 2e is that a handbrake is not engaged (indicating that wheels are not clamped).

The condition 2f is that an auto-hold function (that is, AUTOHOLD) is not activated.

The condition 2g is that there is no fault affecting the motor torque.

Preferably, if any one of conditions 3a to 3g is met, it indicates that the condition for exiting the anti-rollback function is met.

The condition 3a is that the actual vehicle speed is greater than a preset second vehicle speed V2 and an accelerator pedal opening degree is greater than a preset accelerator opening degree A1.

The condition 3b is that the brake pedal is fully depressed and maintained for a second preset time $t_2$.

The condition 3c is that a collision fault occurs.

The condition 3d is that the handbrake is engaged.

The condition 3e is that the gear is shifted from the D gear or the R gear (that is, a drive gear) to a non-drive gear (that is, the P gear or an N gear).

The condition 3f is that (a vehicle having a radar or camera function) detects that a distance from a front target is less than a preset distance threshold B1.

The condition 3g is that an automatic emergency braking function (of a vehicle having the automatic emergency braking function) is activated.

The auxiliary control system for preventing an electric vehicle from rolling back described in the present invention includes an auxiliary controller. The auxiliary controller is programmed to perform the foregoing auxiliary control method for preventing an electric vehicle from rolling back.

The vehicle described in the present invention includes the foregoing auxiliary control system for preventing an electric vehicle from rolling back.

In the present invention, operation manners of the driver are distinguished, that is, a scenario in which the vehicle is parked on the hill and the driver shifts the gear from the P gear to the D gear or to the R gear, a scenario in which the vehicle is always in the D gear or the R gear and the brake pedal is depressed to activate the hill assist function, and a scenario in which the vehicle is always in the D gear or the R gear and the brake pedal is depressed but not to activate the hill assist function are considered, and different motor torque is loaded for different operation manners. This enhances reliability of the anti-rollback function, improves comfort and safety of driving on the hill by the driver, and improves hill start experience of the driver.

BRIEF DESCRIPTION OF DRAWINGS

FIG. 1 is an architectural diagram of an auxiliary control system for preventing an electric vehicle from rolling back according to Embodiment 1; and

FIG. 2 is a flowchart of auxiliary control for preventing an electric vehicle from rolling back according to Embodiment 1.

DESCRIPTION OF EMBODIMENTS

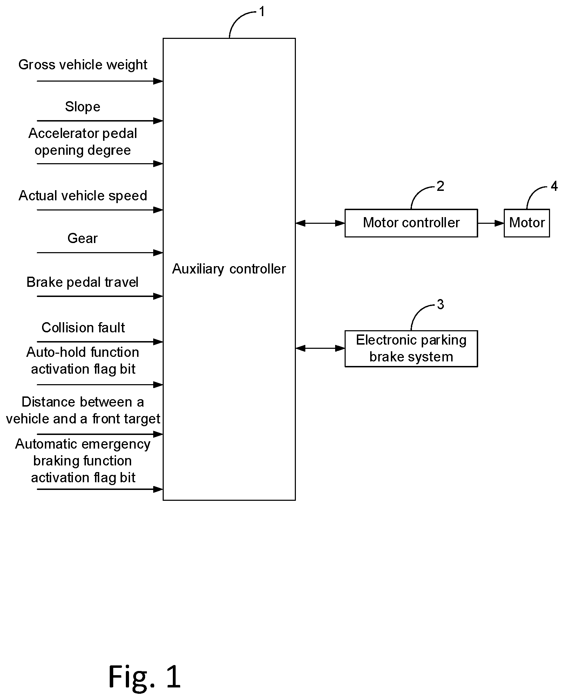

Embodiment 1: As shown in FIG. 1, an auxiliary control system for preventing an electric vehicle from rolling back in this embodiment includes an auxiliary controller 1. The auxiliary controller 1 is connected to a motor controller 2, obtains information indicating that there is a/no fault affecting motor torque, and sends, to the motor controller 2, a signal for requesting to control a motor to output related torque. After receiving the signal, the motor controller 2 controls the motor 4 to output the related torque. The auxiliary controller 1 is connected to an electronic parking brake system 3 (that is, EPB), obtains handbrake status information, and sends a signal for requesting the electronic parking brake system to maintain clamping to the electronic parking brake system 3. The auxiliary controller 1 obtains a gross vehicle weight, a slope (that is, a slope of a road on which the vehicle is located), an accelerator pedal opening degree, an actual vehicle speed, gear information, brake pedal travel, collision fault information, an auto-hold function activation flag bit (used to determine whether an auto-hold function is activated), distance information between the vehicle and a front target (an object or a vehicle), an automatic emergency braking function activation flag bit (used to determine whether an automatic emergency braking function is activated), and the like from a CAN bus.

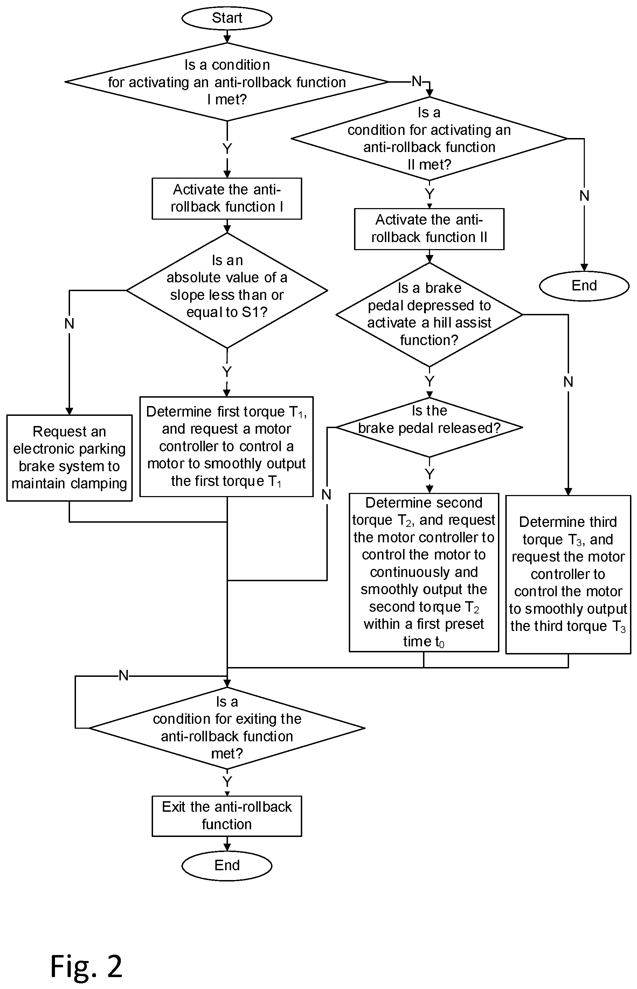

As shown in FIG. 2, in an auxiliary control method for preventing an electric vehicle from rolling back in this embodiment, the foregoing auxiliary control system for preventing an electric vehicle from rolling back is used. The auxiliary control method specifically includes the following steps.

Step 1: Determine whether a condition for activating an anti-rollback function I is met. If yes, step 2 is performed. Otherwise, step 6 is performed.

If all of conditions 1a to 1e are met, it indicates that the condition for activating the anti-rollback function I is met. The condition 1a is that a gear is shifted from a P gear to a D gear or an R gear. The condition 1b is that when the gear is shifted to the D gear, a slope is greater than or equal to 5%, or when the gear is shifted to the R gear, a slope is less than or equal to -5%. In this embodiment, S2=5%. The condition 1c is that an actual vehicle speed is less than or equal to a preset first vehicle speed V1. In this embodiment, V1=1.0 km/h. The condition 1d is that an accelerator pedal is not depressed (that is, an accelerator pedal opening degree is less than 1%). The condition 1e is that there is no fault affecting motor torque.

Step 2: Activate the anti-rollback function I. Then, step 3 is performed.

Step 3: Determine whether an absolute value of the slope is less than or equal to a first preset slope S1 (in this embodiment, S1=10%). If yes, step 4 is performed. Otherwise, step 5 is performed.

Step 4: Determine first torque $T_1$, and request a motor controller 2 to control a motor 4 to smoothly output the first torque $T_1$. Then, step 12 is performed.

After receiving a request signal for controlling the motor to smoothly output the first torque $T_1$, the motor controller 2 controls the motor 4 to smoothly output the first torque $T_1$, to prevent rollback.

A method for determining the first torque $T_1$ is: first obtaining a gross vehicle weight and the slope (that is, a slope of a road on which the vehicle is located); and then substituting the gross vehicle weight and the absolute value of the slope into a preset torque curve, to calculate the corresponding first torque $T_1$. The preset torque curve is a correspondence curve that is between first torque and both a gross vehicle weight and an absolute value of a slope and that is obtained by using a numerical fitting method (for example, a least square method) based on the gross vehicle weight, the absolute value of the slope, and experimental data (for example, Table 1) of the first torque.

Table 1

|  | Absolute value 1 of a slope | Absolute value 2 of a slope | Absolute value 3 of a slope | Absolute value 4 of a slope |
|---|---|---|---|---|
| Gross vehicle weight 1 | T11 | T12 | T13 | T14 |
| Gross vehicle weight 2 | T21 | T22 | T23 | T24 |
| Gross vehicle weight 3 | T31 | T32 | T33 | T34 |
| Gross vehicle weight 4 | T41 | T42 | T43 | T44 |

The gross vehicle weight is a positive value, and is not a negative value. Therefore, a heavier gross vehicle weight indicates higher first torque. The slope is a positive value or a negative value. When a front of the vehicle faces downhill, the slope is a negative value; or when a front of the vehicle faces uphill, the slope is a positive value. A larger absolute value of the slope indicates higher first torque. The correspondence curve between the first torque and both the gross vehicle weight and the absolute value of the slope is obtained by using the numerical fitting method, and the first torque is calculated based on the curve. This can reduce some experimental and testing conditions, and lower research and development costs.

Requesting the motor controller 2 to control a motor to smoothly output the first torque $T_1$ means requesting the motor controller 2 to control torque output by the motor to be increased from 0 to the first torque $T_1$ based on a third gradient c. The third gradient c is obtained by querying a preset third gradient table based on the gross vehicle weight and the absolute value of the slope. The preset third gradient table is a correspondence table that is between a third gradient and both a gross vehicle weight and an absolute value of a slope and that is obtained through calibration. A heavier gross vehicle weight indicates a larger third gradient c, and a larger absolute value of the slope indicates a larger third gradient c. In the gradient-based increase manner, responsiveness of the first torque can be ensured, and loading stability of the first torque can be ensured, to avoid an impact problem of the vehicle.

Step 5: Request an electronic parking brake system (that is, EPB) to maintain clamping, to implement that the vehicle is parked without rolling back. Then, step 12 is performed.

After the anti-rollback function I is activated, a control manner of outputting torque by the motor for rollback prevention and a control manner of implementing clamping by the EPB for rollback prevention are separately used based on the absolute value of the slope. This can ensure that the vehicle does not roll backward (a rollback distance is less than 1 cm), reduce a quantity of times the EPB works, and prolong a working life of the EPB. In addition, this can reduce a quantity of times the motor outputs high torque, save some energy, ensure specific driving smoothness, and lower difficulty in controlling the motor to load the torque on a large hill.

Step 6: Determine whether a condition for activating an anti-rollback function II is met. If yes, step 7 is performed. Otherwise, the method ends.

If all of conditions 2a to 2g are met, it indicates that the condition for activating the anti-rollback function II is met. The condition 2a is that the gear is the D gear or the R gear. The condition 2b is that when the gear is the D gear, the slope is greater than or equal to 5%; or when the gear is the R gear, the slope is less than or equal to -5%. The condition 2c is that the actual vehicle speed is less than or equal to the preset first vehicle speed V1. The condition 2d is that the accelerator pedal is not depressed. The condition 2e is that a handbrake is not engaged (indicating that wheels are not clamped). The condition 2f is that an auto-hold function (that is, AUTOHOLD) is not activated. The condition 2g is that there is no fault affecting the motor torque.

Step 7: Activate the anti-rollback function II. Then, step 8 is performed.

Step 8: Determine whether a brake pedal is depressed to activate a hill assist function. If yes, step 9 is performed. Otherwise, step 11 is performed.

Step 9: Determine whether the brake pedal is released. If yes, step 10 is performed. Otherwise, step 12 is performed.

Step 10: Determine second torque $T_2$, and request the motor controller 2 to control the motor to continuously and smoothly output the second torque $T_2$ within a first preset time $t_0$. Then, step 12 is performed. The first preset time $t_0$ is equal to a hill assist function hold time.

After receiving a request signal for controlling the motor to continuously and smoothly output the second torque $T_2$ within the first preset time $t_0$, the motor controller 2 controls the motor 4 to continuously and smoothly output the second torque $T_2$ within the first preset time $t_0$, to assist a driver in depressing an accelerator for starting.

A method for determining the second torque $T_2$ is:

obtaining the slope (that is, the slope of the road on which the vehicle is located) and an actual vehicle speed; and

calculating the second torque $T_2$ by using a formula $T_2 = \begin{cases} T_{int}, 0 \leq t \leq t_1 \\ T_{comp}, t_1 < t \leq t_0 \end{cases}$ .

Herein, $T_{int}$ represents first-stage torque, duration of the first-stage torque is $t_1$, $T_{int} = k_1 \times T_{crp}$, $k_1$ represents a correction coefficient, $T_{crp}$ represents creep torque, $T_{comp}$ represents second-stage torque, duration of the second-stage torque is $t_0 - t_1$, and $T_{comp}$ is obtained by performing PI closed-loop calculation based on a difference between the actual vehicle speed and a preset starting vehicle speed. In this embodiment, the preset starting vehicle speed is 2.0 km/h. A P parameter in PI closed-loop calculation is obtained by querying a preset P parameter table based on the difference between the actual vehicle speed and the preset starting vehicle speed, and an I parameter in PI closed-loop calculation is obtained by querying a preset I parameter table based on the difference between the actual vehicle speed and the preset starting vehicle speed. The preset P parameter table is a correspondence table that is between a P parameter and a difference between an actual vehicle speed and a starting vehicle speed and that is obtained through calibration. A smaller difference between the actual vehicle speed and the starting vehicle speed indicates a smaller P parameter. The preset I parameter table is a correspondence table that is between an I parameter and a difference between an actual vehicle speed and a starting vehicle speed and that is obtained through calibration. A smaller difference between the actual vehicle speed and the starting vehicle speed indicates a smaller I parameter.

A preset timetable is queried based on the absolute value of the slope, to obtain the duration $t_1$ of the first-stage torque. The preset timetable is a correspondence table that is between an absolute value of a slope and time and that is obtained through calibration. A larger absolute value of the slope indicates shorter duration $t_1$ of the first-stage torque.

A preset correction coefficient table is queried based on the absolute value of the slope, to obtain the correction coefficient $k_1$. The preset correction coefficient table is a correspondence table that is between an absolute value of a slope and a correction coefficient and that is obtained through calibration. A larger absolute value of the slope indicates a larger correction coefficient $k_1$.

A preset creep torque table is queried based on the actual vehicle speed, to obtain the creep torque $T_{crp}$. The preset creep torque table is a correspondence table that is between a vehicle speed and creep torque and that is obtained through calibration.

Requesting the motor controller 2 to control the motor to continuously and smoothly output the second torque $T_2$ within the first preset time $t_0$ means requesting the motor controller 2 to control the torque output by the motor to be increased from 0 to $T_{int}$ based on a first gradient a and last for $t_1$, and then control the torque to be changed from $T_{int}$ to $T_{comp}$ based on a second gradient b and last for $t_0$ - $t_1$. The first gradient a is obtained by querying a preset first gradient table based on the gross vehicle weight and the absolute value of the slope. The second gradient b is obtained by querying a preset second gradient table based on the gross vehicle weight and the absolute value of the slope. The preset first gradient table is a correspondence table that is between a first gradient and both a gross vehicle weight and an absolute value of a slope and that is obtained through calibration. A heavier gross vehicle weight indicates a larger first gradient a, and a larger absolute value of the slope indicates a larger first gradient a. The preset second gradient table is a correspondence table that is between a second gradient and both a gross vehicle weight and an absolute value of a slope and that is obtained through calibration. A heavier gross vehicle weight indicates a larger second gradient b, and a larger absolute value of the slope indicates a larger second gradient b. In the gradient-based increase manner, responsiveness of the second torque can be ensured, and loading stability of the second torque can be ensured, to avoid an impact problem of the vehicle.

The torque loaded during a period in which the hill assist function works is divided into two stages. Different torque is loaded in the two stages (that is, different calculation manners are used), to implement a smooth transition between the anti-rollback function and a creep function. PI closed-loop control in the second stage is bottom line control, to prevent the vehicle from rolling backward.

Step 11: Determine third torque $T_3$, and request the motor controller 2 to control the motor to smoothly output the third torque $T_3$. Then, step 12 is performed.

After receiving a request signal for controlling the motor to smoothly output the third torque $T_3$, the motor controller 2 controls the motor 4 to smoothly output the third torque $T_3$, to prevent rollback.

A method for determining the third torque $T_3$ is:

> obtaining an actual vehicle speed, the slope (that is, the slope of the road on which the vehicle is located), and brake pedal travel;
> querying a preset initial torque table based on the actual vehicle speed and the absolute value of the slope, to obtain initial torque $T_s$, where the preset initial torque table is a correspondence table that is between initial torque and both an actual vehicle speed and an absolute value of a slope and that is obtained through calibration;
> querying a preset correction factor table based on the brake pedal travel, to obtain a correction factor $k_2$, where the preset correction factor table is a correspondence table that is between brake pedal travel and a correction factor and that is obtained through calibration, and longer brake pedal travel indicates a smaller correction factor; and
> calculating the third torque $T_3$ by using a formula $T_3 = k_2 \times T_s$.

The third torque $T_3$ is determined based on the actual vehicle speed, the absolute value of the slope, and the brake pedal travel. This can ensure that a following intention of the driver on the hill and the anti-rollback function can be implemented at different vehicle speeds and slopes, and difficulty of driving by the driver is lowered.

Requesting the motor controller 2 to control the motor to smoothly output the third torque $T_3$ means requesting the motor controller 2 to control the torque output by the motor to be increased from 0 to the third torque $T_3$ based on a fourth gradient d. The fourth gradient d is obtained by querying a preset fourth gradient table based on the gross vehicle weight and the absolute value of the slope. The preset fourth gradient table is a correspondence table that is between a fourth gradient and both a gross vehicle weight and an absolute value of a slope and that is obtained through calibration. A heavier gross vehicle weight indicates a larger fourth gradient d, and a larger absolute value of the slope indicates a larger fourth gradient d. In the gradient-based increase manner, responsiveness of the third torque can be ensured, and loading stability of the third torque can be ensured, to avoid an impact problem of the vehicle.

After the anti-rollback function II is activated, control is performed in two cases. This can ensure that during a period in which a hill hold control system (that is, HHC) works, the torque is preloaded in advance, to avoid a case in which the vehicle rolls backward due to untimely motor torque control. If the hill assist function is not activated, the driver depresses the brake pedal, and loads the motor torque, to assist in rollback prevention. This reduces a fatigue degree when the driver depresses the brake pedal during driving.

**Step** 12: Determine whether a condition for exiting the anti-rollback function is met. If yes, step 13 is performed. Otherwise, step 12 continues to be performed.

If any one of conditions 3a to 3g is met, it indicates that the condition for exiting the anti-rollback function is met. The condition 3a is that the actual vehicle speed is greater than a preset second vehicle speed V2 and the accelerator pedal opening degree is greater than a preset accelerator opening degree A1. In this embodiment, V2=3.0 km/h, and A1=15%. The condition 3b is that the brake pedal is fully depressed (that is, the travel of the depressed brake pedal is greater than or equal to 90% of total travel) and maintained for a second preset time $t_2$. In this embodiment, $t_2$=5s. The condition 3c is that a collision fault occurs. The condition 3d is that the handbrake is engaged. The condition 3e is that the gear is shifted from the D gear or the R gear to a non-drive gear (that is, the P gear or an N gear). The condition 3f is that (a vehicle having a radar or camera function) detects that a distance from a front target is less than a preset distance threshold B1. In this embodiment, B1=15 cm. The condition 3g is that an automatic emergency braking function (that is, an AEB function) (of a vehicle having the automatic emergency braking function) is activated.

Step 13: Exit the anti-rollback function (exit the anti-rollback function I if the anti-rollback function I is previously activated; or exit the anti-rollback function II if the anti-rollback function II is previously activated). Then, the method ends.

This embodiment further provides a vehicle, and the vehicle includes the foregoing auxiliary control system for preventing an electric vehicle from rolling back.

Embodiment 2: An auxiliary control system for preventing an electric vehicle from rolling back in this embodiment is the same as that in Embodiment 1. Most steps of an auxiliary control method for preventing an electric vehicle from rolling back in this embodiment are the same as those in Embodiment 1. Differences are as follows:

A method for determining the first torque $T_1$ is: first obtaining a gross vehicle weight and the slope (that is, a slope of a road on which the vehicle is located); and then querying a preset first torque table by using a linear interpolation method based on the gross vehicle weight and the absolute value of the slope, to obtain the corresponding first torque $T_1$. The preset first torque table is a correspondence table that is between first torque and both a gross vehicle weight and an absolute value of a slope and that is obtained through experimentation. The gross vehicle weight is a positive value, and is not a negative value. Therefore, a heavier gross vehicle weight indicates higher first torque. The slope is a positive value or a negative value. When a front of the vehicle faces downhill, the slope is a negative value; or when a front of the vehicle faces uphill, the slope is a positive value. A larger absolute value of the slope indicates higher first torque. The first torque is calculated by using the linear interpolation method. This can reduce some experimental and testing conditions, and lower research and development costs.

Embodiment 3: An auxiliary control system for preventing an electric vehicle from rolling back in this embodiment is the same as that in Embodiment 1. Most steps of an auxiliary control method for preventing an electric vehicle from rolling back in this embodiment are the same as those in Embodiment 1. Differences are as follows:

Requesting the motor controller 2 to control the motor to smoothly output the first torque $T_1$ means requesting the motor controller 2 to control torque output by the motor to be increased from 0 to the first torque $T_1$ in a first-order filtering or second-order filtering manner. In the filtering manner, responsiveness of the first torque can be ensured, and loading stability of the first torque can be ensured, to avoid an impact problem of the vehicle.

Requesting the motor controller 2 to control the motor to continuously and smoothly output the second torque $T_2$ within the first preset time $t_0$ means requesting the motor controller 2 to control the torque output by the motor to be increased from 0 to $T_{int}$ in the first-order filtering or second-order filtering manner and last for $t_1$, and then control the torque to be changed from $T_{int}$ to $T_{comp}$ in the first-order filtering or second-order filtering manner and last for $t_0$ - $t_1$. In the filtering manner, responsiveness of the second torque can be ensured, and loading stability of the second torque can be ensured, to avoid an impact problem of the vehicle.

Requesting the motor controller 2 to control the motor to smoothly output the third torque $T_3$ means requesting the motor controller 2 to control the torque output by the motor to be increased from 0 to the third torque $T_3$ in the first-order filtering or second-order filtering manner. In the filtering manner, responsiveness of the third torque can be ensured, and loading stability of the third torque can be ensured, to avoid an impact problem of the vehicle.

This embodiment further provides a storage medium. The storage medium stores a computer-readable program. When the computer-readable program is invoked, the steps of the auxiliary control method for preventing an electric vehicle from rolling back in this embodiment can be performed.

It should be noted that the storage medium described in this embodiment may be a computer-readable signal medium, a computer-readable storage medium, or any combination thereof. The computer-readable storage medium may be, for example, an electrical system, apparatus, or device, a magnetic system, apparatus, or device, an optical system, apparatus, or device, an electromagnetic system, apparatus, or device, an infrared system, apparatus, or device, or a semiconductor system, apparatus, or device, or any combination thereof. A more specific example of the computer-readable storage medium may include but is not limited to an electrical connection having one or more wires, a portable computer disk, a hard disk, a random access memory (RAM), a read-only memory (ROM), an erasable programmable read-only memory (Erasable Programmable Read Only Memory, EPROM), a flash memory, an optical fiber, a portable compact disk read-only memory (Compact Disc Read-Only Memory, CD-ROM), an optical storage device, a magnetic storage device, or any proper combination thereof. In this embodiment, the computer-readable signal medium may include a data signal propagated in a baseband or as a part of a carrier, and carries a computer-readable computer program. The propagated data signal may be in a plurality of forms, including but not limited to an electromagnetic signal, an optical signal, or any suitable combination thereof. The computer-readable signal medium may alternatively be any computer-readable medium other than a computer-readable storage medium, and the computer-readable medium may send, propagate, or transmit a program used by or in combination with an instruction execution system, apparatus, or device. The computer program included in the computer-readable medium may be transmitted by using any proper medium, including but not limited to a wireless medium or a wired medium, or any proper combination thereof.

**Claims**

1. An auxiliary control method for preventing an electric vehicle from rolling back, comprising:

   when an anti-rollback function I is activated, determining first torque $T_1$ and requesting to control a motor to smoothly output the first torque $T_1$ if an absolute value of a slope is less than or equal to a first preset slope S1; or requesting an electronic parking brake system to maintain clamping if the absolute value of the slope is greater than the first preset slope S1;
   when an anti-rollback function II is activated, determining second torque $T_2$ and requesting to control the motor to continuously and smoothly output the second torque $T_2$ within a first preset time $t_0$ if a brake pedal is depressed to activate a hill assist function and the brake pedal is released; or determining third torque $T_3$ and requesting to control the motor to smoothly output the third torque $T_3$ if the brake pedal is depressed not to activate the hill assist function, wherein the first preset time $t_0$ is equal to a hill assist function hold time; and
   when a condition for exiting the anti-rollback function is met, exiting the anti-rollback function.

2. The auxiliary control method for preventing an electric vehicle from rolling back according to claim 1, determining the first torque $T_1$ including:

   obtaining a gross vehicle weight and the slope; and
   substituting the gross vehicle weight and the absolute value of the slope into a preset torque curve, to calculate the corresponding first torque $T_1$, wherein
   the preset torque curve is a correspondence curve that is between the first torque and both the gross vehicle weight and the absolute value of the slope and that is obtained by using a numerical fitting method based on experimental data of the gross vehicle weight, the absolute value of the slope, and the first torque.

3. The auxiliary control method for preventing an electric vehicle from rolling back according to claim 1, determining the first torque $T_1$ including:

   obtaining a gross vehicle weight and the slope; and
   querying a preset first torque table by using a linear interpolation method based on the gross vehicle weight and the absolute value of the slope, to obtain the corresponding first torque $T_1$, wherein
   the preset first torque table is a correspondence table that is between the first torque and both the gross vehicle weight and the absolute value of the slope and that is obtained through experimentation.

4. The auxiliary control method for preventing an electric vehicle from rolling back according to claim 1, determining the second torque $T_2$ including:

   obtaining the slope and an actual vehicle speed; and

   calculating the second torque $T_2$ by using a formula $T_2 = \begin{cases} T_{int}, 0 \leq t \leq t_1 \\ T_{comp}, t_1 < t \leq t_0 \end{cases}$ , wherein $T_{int}$ represents first-stage torque, duration of the first-stage torque is $t_1$, $T_{int} = k_1 \times T_{crp}$, $k_1$ represents a correction coefficient, $T_{crp}$ represents creep torque, $T_{comp}$ represents second-stage torque, duration of the second-stage

torque is $t_0 - t_1$, and $T_{comp}$ is obtained by performing PI closed-loop calculation based on a difference between the actual vehicle speed and a preset starting vehicle speed.

5. The auxiliary control method for preventing an electric vehicle from rolling back according to claim 4, wherein

a preset timetable is queried based on the absolute value of the slope, to obtain the duration $t_1$ of the first-stage torque, wherein the preset timetable is a correspondence table that is between the absolute value of the slope and time and that is obtained through calibration;
a preset correction coefficient table is queried based on the absolute value of the slope, to obtain the correction coefficient $k_1$, wherein the preset correction coefficient table is a correspondence table that is between the absolute value of the slope and the correction coefficient and that is obtained through calibration; and
a preset creep torque table is queried based on the actual vehicle speed, to obtain the creep torque $T_{crp}$, wherein the preset creep torque table is a correspondence table that is between the vehicle speed and the creep torque and that is obtained through calibration.

6. The auxiliary control method for preventing an electric vehicle from rolling back according to claim 5, wherein requesting to control the motor to continuously and smoothly output the second torque $T_2$ within the first preset time $t_0$ means requesting to control torque output by the motor to be increased from 0 to $T_{int}$ based on a first gradient a and last for $t_1$, and then control the torque to be changed from $T_{int}$ to $T_{comp}$ based on a second gradient b and last for $t_0 - t_1$, wherein the first gradient a is obtained by querying a preset first gradient table based on the gross vehicle weight and the absolute value of the slope, the second gradient b is obtained by querying a preset second gradient table based on the gross vehicle weight and the absolute value of the slope, the preset first gradient table is a correspondence table that is between the first gradient and both the gross vehicle weight and the absolute value of the slope and that is obtained through calibration, and the preset second gradient table is a correspondence table that is between the second gradient and both the gross vehicle weight and the absolute value of the slope and that is obtained through calibration.

7. The auxiliary control method for preventing an electric vehicle from rolling back according to claim 5, wherein requesting to control the motor to continuously and smoothly output the second torque $T_2$ within the first preset time $t_0$ means requesting to control torque output by the motor to be increased from 0 to $T_{int}$ in a first-order filtering or second-order filtering manner and last for $t_1$, and then control the torque to be changed from $T_{int}$ to $T_{comp}$ in the first-order filtering or second-order filtering manner and last for $t_0 - t_1$.

8. The auxiliary control method for preventing an electric vehicle from rolling back according to claim 2, determining the third torque $T_3$ including:

obtaining an actual vehicle speed, the slope, and brake pedal travel;
querying a preset initial torque table based on the actual vehicle speed and the absolute value of the slope, to obtain initial torque $T_s$, wherein the preset initial torque table is a correspondence table that is between the initial torque and both the actual vehicle speed and the absolute value of the slope and that is obtained through calibration;
querying a preset correction factor table based on the brake pedal travel, to obtain a correction factor $k_2$, wherein the preset correction factor table is a correspondence table that is between the brake pedal travel and the correction factor and that is obtained through calibration; and
calculating the third torque $T_3$ by using a formula $T_3 = k_2 \times T_s$.

9. The auxiliary control method for preventing an electric vehicle from rolling back according to any one of claims 1 to 8, wherein

requesting to control the motor to smoothly output the first torque $T_1$ means requesting to control the torque output by the motor to be increased from 0 to the first torque $T_1$ based on a third gradient c, wherein the third gradient c is obtained by querying a preset third gradient table based on the gross vehicle weight and the absolute value of the slope, and the preset third gradient table is a correspondence table that is between the third gradient and both the gross vehicle weight and the absolute value of the slope and that is obtained through calibration; and
requesting to control the motor to smoothly output the third torque $T_3$ means requesting to control the torque output by the motor to be increased from 0 to the third torque $T_3$ based on a fourth gradient d, wherein the fourth gradient d is obtained by querying a preset fourth gradient table based on the gross vehicle weight and the absolute value of the slope, and the preset fourth gradient table is a correspondence table that is between the fourth gradient and both the gross vehicle weight and the absolute value of the slope and that is obtained through calibration.

10. The auxiliary control method for preventing an electric vehicle from rolling back according to any one of claims 1 to 8, wherein

requesting to control the motor to smoothly output the first torque $T_1$ means requesting to control the torque output by the motor to be increased from 0 to the first torque $T_1$ in a first-order filtering or second-order filtering manner; and

requesting to control the motor to smoothly output the third torque $T_3$ means requesting to control the torque output by the motor to be increased from 0 to the third torque $T_3$ in the first-order filtering or second-order filtering manner.

11. The auxiliary control method for preventing an electric vehicle from rolling back according to any one of claims 1 to 8, wherein

if all of conditions 1a to 1e are met, it indicates that a condition for activating the anti-rollback function I is met, and the anti-rollback function I is activated, wherein

the condition 1a is that a gear is shifted from a P gear to a D gear or to an R gear;

the condition 1b is that when a shift to the D gear is made, the slope is greater than or equal to S2; or when a shift to the R gear is made, the slope is less than or equal to -S2, wherein S2 represents a second preset slope, and 0<S2<S1;

the condition 1c is that an actual vehicle speed is less than or equal to a preset first vehicle speed V1;

the condition 1d is that an accelerator pedal is not depressed; and

the condition 1e is that there is no fault affecting the motor torque;

if all of conditions 2a to 2g are met, it indicates that a condition for activating the anti-rollback function II is met, and the anti-rollback function II is activated, wherein

the condition 2a is that the gear is in the D gear or the R gear;

the condition 2b is that in the D gear, the slope is greater than or equal to S2; or in the R gear, the slope is less than or equal to -S2;

the condition 2c is that the actual vehicle speed is less than or equal to the preset the first vehicle speed V1;

the condition 2d is that the accelerator pedal is not depressed;

the condition 2e is that a handbrake is not engaged;

the condition 2f is that an auto-hold function is not activated; and

the condition 2g is that there is no fault affecting the motor torque; and

if any one of conditions 3a to 3g is met, it indicates that the condition for exiting the anti-rollback function is met, wherein

the condition 3a is that the actual vehicle speed is greater than a preset second vehicle speed V2 and an accelerator pedal opening degree is greater than a preset accelerator opening degree A1;

the condition 3b is that the brake pedal is fully depressed and maintained for a second preset time $t_2$;

the condition 3c is that a collision fault occurs;

the condition 3d is that the handbrake is engaged;

the condition 3e is that the gear is shifted from the D gear or the R gear to a non-drive gear;

the condition 3f is that it is detected that a distance from a front target is less than a preset distance threshold B1; and

the condition 3g is that an automatic emergency braking function is activated.

12. An auxiliary control system for preventing an electric vehicle from rolling back, comprising an auxiliary controller (1), wherein the auxiliary controller (1) is programmed to perform the auxiliary control method for preventing an electric vehicle from rolling back according to any one of claims 1 to 11.

13. A vehicle, comprising the auxiliary control system for preventing an electric vehicle from rolling back according to claim 12.

Gross vehicle weight

Slope

Accelerator pedal
opening degree

Actual vehicle speed

Gear

Brake pedal travel

Collision fault

Auto-hold function
activation flag bit

Distance between a
vehicle and a front target

Automatic emergency
braking function
activation flag bit

Auxiliary controller

Motor controller

Motor

Electronic parking
brake system

Fig. 1

Fig. 2

# INTERNATIONAL SEARCH REPORT

| International application No. |
| --- |
| **PCT/CN2023/120995** |

### A. CLASSIFICATION OF SUBJECT MATTER

B60L15/20(2006.01)i; B60L15/00(2006.01)i; B60W30/18(2012.01)i; B60W30/00(2006.01)i; B60W10/08(2006.01)i; B60W10/00(2006.01)i; B60T7/12(2006.01)i; B60T7/00(2006.01)i; B60W40/076(2012.01)i; B60W40/06(2012.01)i

According to International Patent Classification (IPC) or to both national classification and IPC

### B. FIELDS SEARCHED

Minimum documentation searched (classification system followed by classification symbols)

IPC: B60L15/-; B60W30/-; B60W10/-; B60T7/-; B60W40/-

Documentation searched other than minimum documentation to the extent that such documents are included in the fields searched

Electronic data base consulted during the international search (name of data base and, where practicable, search terms used)

CNABS, CNTXT, WPABSC, ENTXTC, CNKI: 深蓝汽车, 杨官龙, 电动, 电车, 纯电, 混动, 溜坡, 溜车, 稳坡, 防溜, 场景, 路况, 上坡, 下坡, 坡道辅助, 坡道保持, 上坡辅助, HHC, HAC, HAS, 电子驻车, EPB, 激活, 启动, 开启, 触发, 制动, 刹车, 踏板, 脚踏, 开度, 电机, 扭矩, 扭力, 转矩, 力矩, 平滑, 梯度, 前馈, 补偿, PI, 蠕行, 儒行, 预定, 预设, 设定, 目标, 标准, 阈值, 坡度, 角度, 倾斜度, P挡, D挡, R挡, 切换; VEN, USTXT, ENTXT, DWPI, SCI, IEEE: electric, tram, mixing, vehicle, motor, rolling, rollback, scene, road condition, uphill slope, downhill slope, ramp assist, ramp hold, ramp auxiliary, uphill assist, HHC, HAC, HAS, electronic park, electric parking, EPB, EPARK, activate, start, trigger, brake, pedal, foot pedal, opening, torque, moment, smooth+, gradient, feed forward, compensation, PI, creep, repuster, predetermined, preset, set, target, standard, threshold, slope, angle, inclination, P, D, R , gear, switch.

### C. DOCUMENTS CONSIDERED TO BE RELEVANT

| Category* | Citation of document, with indication, where appropriate, of the relevant passages | Relevant to claim No. |
| --- | --- | --- |
| PX | CN 116461347 A (DEEPAL AUTOMOBILE TECHNOLOGY CO., LTD.) 21 July 2023 (2023-07-21)<br>entire document | 1-13 |
| Y | CN 110588371 A (GUOJI ZHIJUN TECHNOLOGY CO., LTD.) 20 December 2019 (2019-12-20)<br>entire document | 1-13 |
| Y | CN 114683870 A (BAONENG MOTOR GROUP CO., LTD.) 01 July 2022 (2022-07-01)<br>entire document | 1-13 |
| Y | CN 103569129 A (CHONGQING CHANGAN AUTOMOBILE CO., LTD. et al.) 12 February 2014 (2014-02-12)<br>entire document | 1-13 |

☑ Further documents are listed in the continuation of Box C.   ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **15 December 2023** | **20 December 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

# EP 4 559 728 A1

## INTERNATIONAL SEARCH REPORT

| International application No. |
|---|
| **PCT/CN2023/120995** |

### C. DOCUMENTS CONSIDERED TO BE RELEVANT

| Category* | Citation of document, with indication, where appropriate, of the relevant passages | Relevant to claim No. |
|---|---|---|
| A | CN 109910887 A (GUOJI ZHIJUN TECHNOLOGY CO., LTD.) 21 June 2019 (2019-06-21)<br>entire document | 1-13 |
| A | CN 115520192 A (CHONGQING CHANG'AN NEW ENERGY AUTOMOBILE TECHNOLOGY CO., LTD.) 27 December 2022 (2022-12-27)<br>entire document | 1-13 |
| A | CN 111071061 A (SHANGHAI QINGDU AUTOMOBILE TECHNOLOGY CO., LTD.) 28 April 2020 (2020-04-28)<br>entire document | 1-13 |
| A | CN 112124088 A (CHERY COMMERCIAL VEHICLE (ANHUI) CO., LTD.) 25 December 2020 (2020-12-25)<br>entire document | 1-13 |
| A | CN 111890946 A (GEELY AUTOMOBILE RESEARCH INSTITUTE (NINGBO) CO., LTD. et al.) 06 November 2020 (2020-11-06)<br>entire document | 1-13 |
| A | CN 114643878 A (CHONGQING CHANG'AN NEW ENERGY AUTOMOBILE TECHNOLOGY CO., LTD.) 21 June 2022 (2022-06-21)<br>entire document | 1-13 |
| A | CN 115848327 A (GUANGZHOU AUTOMOBILE GROUP CO., LTD.) 28 March 2023 (2023-03-28)<br>entire document | 1-13 |
| A | CN 114347802 A (XIAMEN KING LONG UNITED AUTOMOTIVE INDUSTRY CO., LTD.) 15 April 2022 (2022-04-15)<br>entire document | 1-13 |
| A | US 2020398843 A1 (JAGUAR LAND ROVER LTD.) 24 December 2020 (2020-12-24)<br>entire document | 1-13 |
| A | JP 2011229348 A (NISSAN MOTOR CO., LTD.) 10 November 2011 (2011-11-10)<br>entire document | 1-13 |

Form PCT/ISA/210 (second sheet) (July 2022)

17

**INTERNATIONAL SEARCH REPORT**
Information on patent family members

International application No.

**PCT/CN2023/120995**

| Patent document cited in search report | | | Publication date (day/month/year) | Patent family member(s) | | | Publication date (day/month/year) |
|---|---|---|---|---|---|---|---|
| CN | 116461347 | A | 21 July 2023 | None | | | |
| CN | 110588371 | A | 20 December 2019 | None | | | |
| CN | 114683870 | A | 01 July 2022 | None | | | |
| CN | 103569129 | A | 12 February 2014 | CN | 103569129 | B | 30 March 2016 |
| CN | 109910887 | A | 21 June 2019 | CN | 109910887 | B | 28 May 2021 |
| CN | 115520192 | A | 27 December 2022 | None | | | |
| CN | 111071061 | A | 28 April 2020 | None | | | |
| CN | 112124088 | A | 25 December 2020 | None | | | |
| CN | 111890946 | A | 06 November 2020 | CN | 111890946 | B | 17 December 2022 |
| CN | 114643878 | A | 21 June 2022 | None | | | |
| CN | 115848327 | A | 28 March 2023 | None | | | |
| CN | 114347802 | A | 15 April 2022 | CN | 114347802 | B | 09 May 2023 |
| US | 2020398843 | A1 | 24 December 2020 | EP | 3758994 | A1 | 06 January 2021 |
| | | | | WO | 2019162480 | A1 | 29 August 2019 |
| | | | | GB | 201803044 | D0 | 11 April 2018 |
| | | | | GB | 2571329 | A | 28 August 2019 |
| | | | | GB | 2571329 | B | 04 August 2021 |
| JP | 2011229348 | A | 10 November 2011 | JP | 5533191 | B2 | 25 June 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 106926751 A
- CN 111231693 A
- CN 113246748 A
- CN 112265544 A